# EUROPÄISCHE PATENTSCHRIFT

(11) **EP 3 058 813 B1**
(45) Veröffentlichungstag und Bekanntmachung des Hinweises auf die Patenterteilung: **18.10.2017**
(21) Anmeldenummer: 15002033.7
(22) Anmeldetag: 07.09.2015
(51) Int. Cl.: A01K 3/00, B65D 85/00, B65D 61/00

(54) **HILFSEINRICHTUNG ZUM AUF- UND ABBAUEN VON HÜTENETZEN**
AUXILIARY DEVICE FOR SETTING UP AND TAKING DOWN PASTURING FENCES
DISPOSITIF D'AIDE POUR MONTER ET DEMONTER DES FILETS POUR PATURAGES

(30) Priorität: 08.07.2014 DE 102014010076
(43) Veröffentlichungstag der Anmeldung: 24.08.2016
(73) Patentinhaber: Hacker, Josef, 84424 Mittbach (DE)
(72) Erfinder: Hacker, Josef, 84424 Mittbach (DE)
(74) Vertreter: Hartz, Nikolai

(56) Entgegenhaltungen:
- US-A- 1 785 863
- US-B1- 8 864 163

## Beschreibung

Tragbare Hilfseinrichtung zum Auf- und Abbauen sowie zum Transportieren und Lagern von Hütenetz mit bereits eingearbeiteten Zaunpflöcken.

Die Erfindung betrifft eine tragbare Hilfseinrichtung zum Auf- und Abbauen sowie zum Transportieren und Lagern von Hütenetz mit bereits eingearbeiteten Zaunpflöcken nach Patentanspruch 1.

Derzeit ist es lediglich bekannt, Hütenetze mit eingearbeiteten Zaunpflöcken als Packung ohne Kern zu lagern (Katalog der Firma Siepmann, Frühjahr 2014, Seite 32 bis 35, Hütenetze für Geflügel, Schafe, Ziegen, Pferde) und von dieser kernlosen Packung das Hütenetz aufzustellen. Bei Abbau des Zauns wird wieder eine kernlose Packung hergestellt. Bei dieser Arbeitsweise verhaken und verheddern sich die Spitzen der Zaunpflöcke und auch das Hütenetz. US8864163 B1 offenbart einen Wagen geeignet zum Auf- und Abbau sowie Transportieren von Hütenetzen mit Hilfe zweier Stäben, auf der die Zaunpflöcke aufliegen.

Somit ist es die Aufgabe der Erfindung, eine tragbare Hilfseinrichtung zum Auf- und Abbauen sowie zum Transportieren und Lagern von Hütenetz mit bereits eingearbeiteten Zaunpflöcken anzubieten, die es ermöglicht, das Hütenetz so abzubauen und zu lagern, dass beim erneuten Aufstellen des Zauns keine Entwirrarbeiten notwendig sind.

Ausführungsbeispiele der Erfindung werden nachfolgend anhand der Figuren näher erläutert.
- Fig. 1: zeigt die Hilfseinrichtung in der Gesamtansicht
- Fig. 2: zeigt die Hilfseinrichtung mit eingelegten Zaunpflöcken und noch herabhängenden Schlaufen des Hütenetzes

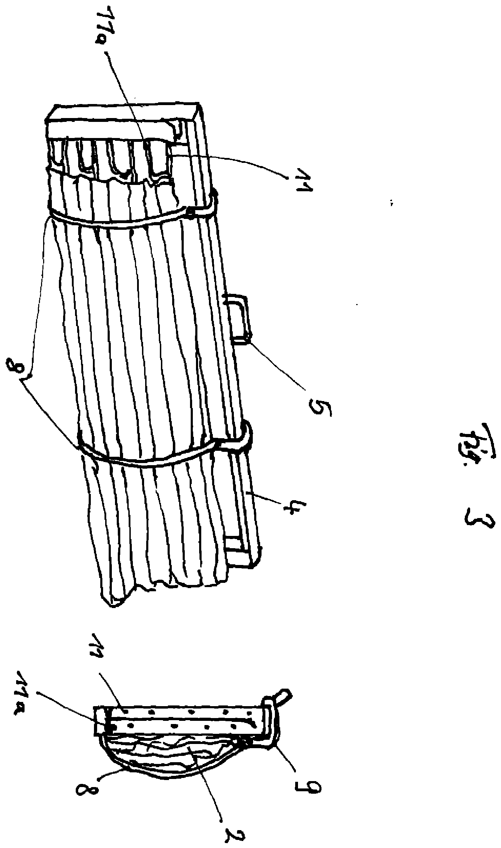

- Fig. 3: zeigt die Hilfseinrichtung mit aufgerollten Schlaufen beim Lagern und Transportieren

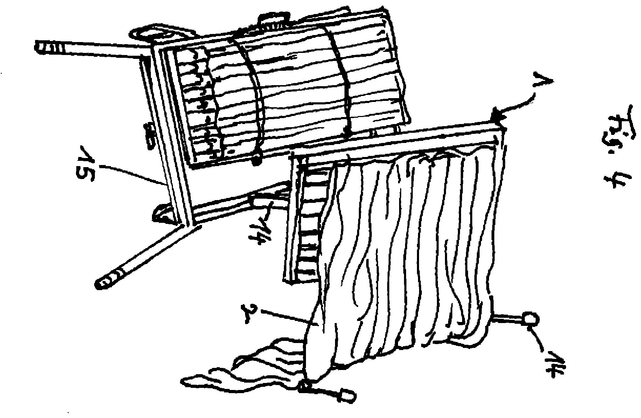

- Fig. 4: zeigt die Hilfseinrichtung auf einem aus der DE 102012023599 A1
bekannten Transportfahrzeug oder dgl. angebracht

Hütenetze 2 mit eingearbeiteten, ein- oder zweispitzigen Zaunpflöcken 3 werden in Einheiten von ca, 50 lfm und Höhen von ca. 1 bis 1,5 Meter im Handel angeboten. Diese Hütenetze können stromführend oder nicht stromführend ausgeführt sein. Die Einheiten werden als kernlose Packung, so wie z. B. im Stand der Technik (Siepmann) angegeben, geliefert. Die Aufstellung des Zauns von dieser Ausgangsituation ist schwierig, denn die kernlose Packung ist schlecht mit einer Hand tragbar und handhabbar. Es treten oft Verhakungen und Verschlaufungen auf, die beseitigt werden müssen. Die einfachste Art der Zaunaufstellung ist es hier, das Hütenetz aus der Packung zunächst in seiner ganzen Länge am Boden auszulegen und dann den Zaun aufzustellen. Hierbei muss jedoch die Zaunlänge mehrmals abgeschritten werden. Soll dies vermieden werden, muss der Zaun von der kernlosen Packung beim Aufbau während des Gehens abgenommen bzw. beim Abbau wieder in eine kernlose Packung gebracht werden, was zu erheblichen Schwierigkeiten beim Auf- und Abbau des Zauns führt.

Hier schafft die tragbare Hilfseinrichtung Abhilfe.

Das Hütenetz 2 wird bereits mit der Hilfseinrichtung 1 geliefert, in der es aufgenommen ist. Bereits vorhandene Netze müssen vor dem ersten Einsatz vom kernlosen Paket in die Hilfseinrichtung 1 überführt werden.

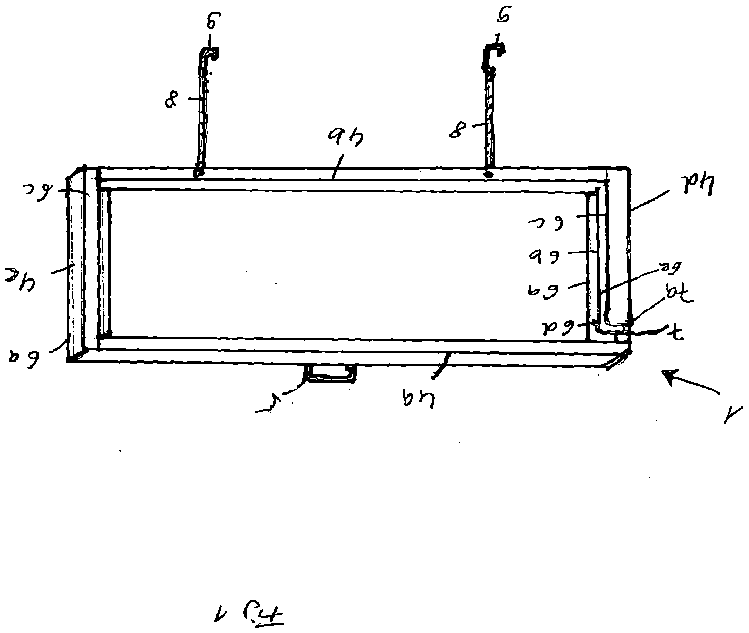

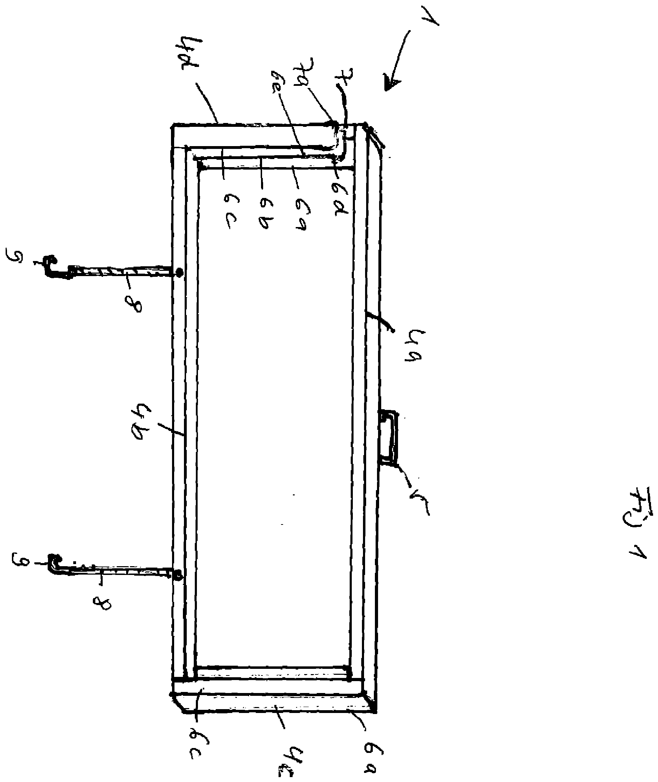

Figur 1 zeugt eine tragbare Hilfseinrichtung. Diese besteht aus einem Rahmen 4, mit in Gebrauchsstellung horizontalen langen, unteren und oberen Rahmenteilen 4a, 4b, die an ihren Enden durch senkrecht stehende, kürzere Rahmenteile 4c, 4d miteinander verbunden sind. Eines der kürzeren Rahmenteile 4d ist als Doppel-U 6d, 6e mit den Aussenschenkeln 6a, 6c und einem gemeinsamen Mittelschenkel 6b ausgebildet. Zwischen den Schenkeln 6a, 6b werden die Rahmenteile 4a und 4b aufgenommen und an diesen befestigt. Sowohl der Mittelschenkel 6b als auch ein Aussenschenkel 6a, 6c sind um eine bestimmte Länge gekürzt, so dass durch die entstandenen Öffnungen 7, 7a die Spitzen 11, 11a der Zaunpfähle quer zur Längsrichtung des Rahmens 4 einfädelbar sind. Die bestimmte Länge ist dabei so bemessen, dass durch die entstandenen Öffnungen 7, 7a die Spitzen 11, 11a leicht einfädelbar sind. Die kürzeren Rahmenteile 4c, 4d sind aus Blech, Kunststoff, Holz oder dgl. gefertigt. Am oberen langen Rahmenteil 4a kann ein Traggriff 5 befestigt sein und am unteren langen Rahmenteil 4b sind mit Abstand zueinander zwei Gummistrippen 8 befestigt, die an ihrem freien Ende einen Haken 9 aufweisen.

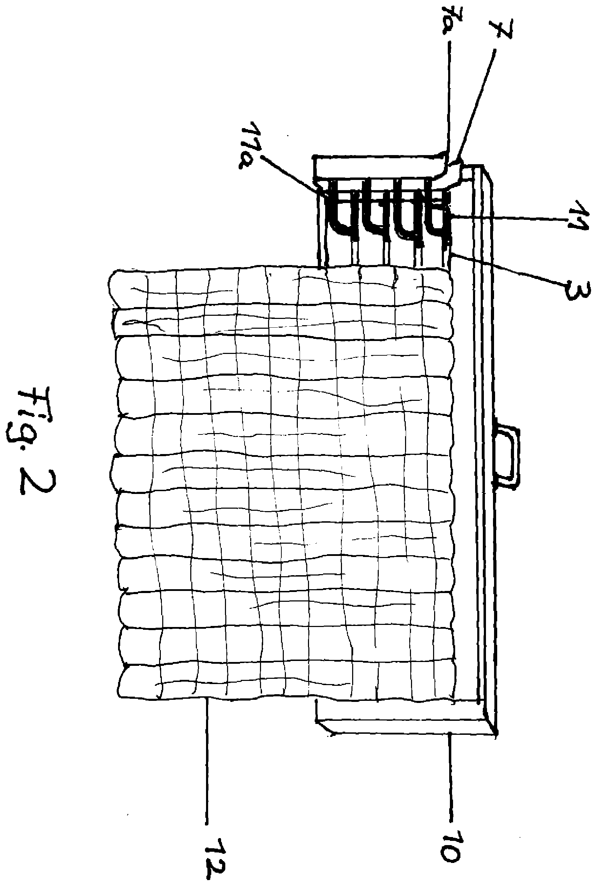

Die Figur 2 zeigt eine andere Ausführung der Ausgestaltung des Mittelschenkels 6b als auch eines Aussenschenkels 6a, 6c. Hierbei ist der Mittelschenkel 6b als auch ein Aussenschenkel 6a, 6c an ihrem oberen Ende an der Übergangsstelle vom Grund des U zum Schenkel für eine bestimmte Länge vom Grund des U abgetrennt und das abgetrennte Ende so weit nach außen gestellt, dass durch die entstandene Öffnung 7 die erste Spitze 11 eines Zaunpfahl 3 in das erste U 6d der Doppel-U form und durch die entstandene zweite Öffnung 7a die zweite Spitze 11a eines Zaunpfahls 3 in das zweite U 6e quer zur Längsrichtung des Rahmens 4 einfädelbar ist. Die bestimmte Länge ist dabei so bemessen, dass die Zaunspitzen 11, 11a durch die entstandene Öffnung leicht einfädelbar sind.

Figur 2 zeigt auch eine mit einem Hütenetz 2 bestückte Hilfseinrichtung 1, z. B. beim Abbauen eines Zauns. Die Zaunpflöcke sind in der Hilfseinrichtung aufgenommen, das zwischen zwei Zaunpflöcken vorhandene Hütenetz hängt als Schlaufe 12 nach unten.

Nachfolgend wird die Arbeitsweise mit der Hilfseinrichtung beim Zaunabbau beschrieben:
Die Hilfseinrichtung 1 wird mit einer Hand am Tragegriff 5 oder direkt am Rahmenteil 4a gehalten. Der erste Zaunpflock 3 wird aus der Erde gezogen und mit seinem oberen Ende 10 in die U-Form des kürzeren senkrechten Rahmenteils 4c eingeführt. Anschließend wird die erste Spitze 11 des Zaunpflocks 3 durch die Öffnung 7 im anderen kürzeren Rahmenteil 4d in die erste U-Form 6d des Doppel-U eingeführt. Falls eine zweite Spitze 11a vorhanden ist, wird diese dann durch die zweite Öffnung 7a in die zweite U-form 6e des Doppel-U eingeführt. Die Hilfseinrichtung 1 wird zum nächsten Zaunpflock 3 bewegt, wobei das Hütenetz 2 eine Schlaufe 12 bildet, die lediglich der halben Zaunlänge zwischen zwei Zaunpflöcken 3 entspricht. Der nächste Zaunpflock 3 wird in der oben beschriebenen Weise in die Hilfseinrichtung 1 eingelegt. Dieser Vorgang erfolgt so lange, bis alle Zaunpflöcke 3 in der Hilfseinrichtung eingelegt sind. Die Hilseinrichtung 1 wird nun am Boden abgelegt. Die Schlaufen 12, die sich zwischen den Zaunpflöcken 3 gebildet haben, werden nun zusammengerollt und mittels der Gummistrippen 8 und der Haken 9 durch einhaken der Haken 9 am oberen Rahmenteil 4a an der Hilfseinrichtung 1 festgelegt. Dies ist auch der Transport- und Lagerzustand. Der weitere Zaunabbau erfolgt mit weiteren leeren Hilfseinrichtungen 1. Die Hütenetze werden so auch gelagert.

Die Arbeitsweise beim Zaunaufbau ist wie folgt:
Die Hilfseinrichtung 1 wird am Boden abgelegt, Die Haken 9 der Gummistrippen 8 werden gelöst, die aufgerollten Schlaufen 12 des Hütenetzes 2 ausgelegt. Nun wird die Hilfseinrichtung 2 am Tragegriff 5 oder direkt am Rahmenteil 4a aufgenommen und der erste Zaunpflock 3 aus der Hilfseinrichtung 1 entnommen und gesetzt. Die Hilfseinrichtung 1 wird weiterbewegt und der nächste Zaunpflock 3 entnommen und nach Spannen des Zauns 2 gesetzt. Dieser Vorgang erfolgt so lange, bis der Vorrat an Hütenetz 2 verbraucht ist und wird mit einer neuen, bestückten Hilfseinrichtung 1 solange fortgesetzt, bis die Einzäunung komplett ist,

Die Hilfseinrichtung 1 bietet sich an bei hügeligem Gelände oder kleinen Einzäunungseinheiten.

Es ist auch denkbar, die Hilfseinrichtung 1 mittels einer aus der DE102012023599 (A1) bekannten Vorrichtung 13 (eine spezielle Transportvorrichtung für Bienenkästen) oder dgl. fahrbar zu machen. Hierbei wird diese mit einer erhöhten Aufnahmeeinrichtung 14 versehen, auf der die Hilfseinrichtung 1 abgelegt werden kann. Von dort erfolgt das Auf- bzw. Abbauen des Zauns. Leere Hilfseinrichtungen können auf der Ladefläche der Transportvorrichtung abgelegt bzw. können volle Hilfseinrichtungen 1 auf der Ladefläche zum Einsatzort gebracht werden.

### Bezugszeichenliste

- 1: Hilfseinrichtung
- 4: Rahmen
- 4a: oberes langes, horizontales Rahmenteil
- 4b: unteres langes horizontales Rahmenteil
- 4c, 4d: kürzere, senkrechte Rahmenteile
- 5: Traggriff
- 6a: Aussenschenkel des U
- 6b: Aussenschenkel des U
- 6d: erstes U des Doppel-U von 4d
- 6e: zweites U des Doppel-U von 4d
- 7, 7a: Öffnung zum einfädeln der Zaunspitzen
- 8: Gummistrippe
- 9: Haken
- 10: Oberes Ende Zaunpfahl 3
- 11, 11a: Spitzen des Zaunpfahls 3
- 12: Schlaufe im Hütenetz 2
- 13: Transportvorrichtung
- 14: darauf angebrachte Ablegeeinrichtung

## Patentansprüche

1. Tragbare Hilfseinrichtung (1) in der zum Auf- und Abbauen sowie zum Transportieren und Lagern ein Hütenetz (2) mit bereits eingearbeiteten Zaunpflöcken (3) aufgenommen ist und wobei die Hilfseinrichtung (1) aus einem rechteckigen Rahmen (4) besteht, dessen längere Seiten (4a, 4b) bei Gebrauch horizontal angeordnet und so lang sind, dass zwischen die sie verbindenden, senkrecht stehenden kurzen Rahmenteile (4c, 4d) ein Zaunpfahl (3) mit Spiel aufnehmbar ist.

2. Tragbare Hilfseinrichtung (1) in der zum Auf- und Abbauen sowie zum Transportieren und Lagern ein Hütenetz (2) mit bereits eingearbeiteten Zaunpflöcken (3) aufgenommen ist, nach Patentanspruch 1, **dadurch gekennzeichnet, dass** ein kurzes, im Gebrauch senkrecht stehendes Rahmenteil (4c) als einfaches U mit den Aussenschenkeln (6a, 6c) und das gegenüberliegende kurze Rahmenteil (4d) als Doppel-U (6d, 6e) mit den Aussenschenkeln (6a, 6c) und einem gemeinsamen Mittelschenkel (6b) ausgestaltet ist und zwischen den Aussenschenkeln (6a, 6c) am jeweils oberen und unteren Ende der kurzen Rahmenteile (4c, 4d) die langen Rahmenteile (4a, 4b) aufgenommen und befestigt sind.

3. Tragbare Hilfseinrichtung (1) in der zum Auf- und Abbauen sowie zum Transportieren und Lagern ein von Hütenetz (2) mit bereits eingearbeiteten Zaunpflöcken (3) aufgenommen ist, nach Patentanspruch 1 oder 2,**dadurch gekennzeichnet, dass** bei dem als Doppel-U (6d, 6e) ausgebildeten kürzeren Rahmenteil (4d) sowohl der Mittelschenkel (6b) als auch einer der Aussenschenkel (6a, 6c) an der Übergangsstelle vom Grund des U zum Schenkel von seinem oberen Ende aus für eine bestimmte Länge abgetrennt und das abgetrennte Ende so weit nach außen gestellt ist, dass durch die entstandene Öffnung (7) die erste Spitze (11) und durch die entstandene zweite Öffnung (7a) die zweite Spitze (11a) eines Zaunpfahls (3) quer zur Längsrichtung des Rahmens (4) leicht einfädelbar ist.

4. Tragbare Hilfseinrichtung (1) in der zum Auf- und Abbauen sowie zum Transportieren und Lagern ein Hütenetz (2) mit bereits eingearbeiteten Zaunpflöcken (3) aufgenommen ist nach einem der Patentansprüche 1 bis 3, **dadurch gekennzeichnet, dass** bei dem als Doppel-U (6d, 6e) ausgebildeten kürzeren Rahmenteil (4d) sowohl der Mitteischenkel (6b) als auch einer der Aussenschenkel (6a, 6c) an der Übergangsstelle vom Grund des U zum Schenkel von seinem oberen Ende aus für eine bestimmte Länge abgetrennt und das abgetrennte Ende entfernt ist, wobei die bestimmte Länge so bemessen ist, dass die Spitzen (11, 11a) des Zaunpfahls (3) leicht einfädelbar sind.

5. Tragbare Hilfseinrichtung (1) in der zum Auf- und Abbauen sowie zum Transportieren und Lagern ein Hütenetz (2) mit bereits eingearbeiteten Zaunpflöcken (3) aufgenommen ist, nach einem der Patentansprüche 1 bis 4, **dadurch gekennzeichnet, dass** am unteren langen Rahmenteil (4b) mit Abstand zueinander zwei Gummistrippen (8) an ihrem einen Ende befestigt sind, wobei an ihrem anderen Ende ein Haken (9) angebracht ist.

6. Verwendung einer tragbaren Hilfseinrichtung (1), wobei die Hilfseinrichtung (1) aus einem rechteckigen Rahmen (4) besteht, dessen längere Seiten (4a, 4b) bei Gebrauch horizontal angeordnet und so lang sind, dass zwischen die sie verbindenden, senkrecht stehenden kurzen Rahmenteile (4c, 4d) ein Zaunpfahl (3) mit Spiel aufnehmbar ist, zum Auf- und Abbauen sowie zum Transportieren und Lagern von Hütenetz (2) mit bereits eingearbeiteten Zaunpflöcken (3).

7. Verwendung nach Anspruch 6, wobei die tragbare Hilfseinrichtung (1) **dadurch gekennzeichnet ist, dass** ein kurzes, im Gebrauch senkrecht stehendes Rahmenteil (4c) als einfaches U mit den Aussenschenkeln (6a, 6c) und das gegenüberliegende kurze Rahmenteil (4d) als Doppel-U (6d, 6e) mit den Aussenschenkeln (6a, 6c) und einem gemeinsamen Mittelschenkel (6b) ausgestaltet ist und zwischen den Aussenschenkeln (6a, 6c) am jeweils oberen und unteren Ende der kurzen Rahmenteile (4c, 4d) die langen Rahmenteile (4a, 4b) aufgenommen und befestigt sind.

8. Verwendung nach Anspruch 6 oder 7, wobei die tragbare Hilfseinrichtung (1) **dadurch gekennzeichnet ist, dass** bei dem als Doppel-U (6d, 6e) ausgebildeten kürzeren Rahmenteil (4d) sowohl der Mittelschenkel (6b) als auch einer der Aussenschenkel (6a, 6c) an der Übergangsstelle vom Grund des U zum Schenkel von seinem oberen Ende aus für eine bestimmte Länge abgetrennt und das abgetrennte Ende so weit nach außen gestellt ist, dass durch die entstandene Öffnung (7) die erste Spitze (11) und durch die entstandene zweite Öffnung (7a) die zweite Spitze (11a) eines Zaunpfahls (3) quer zur Längsrichtung des Rahmens (4) leicht einfädelbar ist.

9. Verwendung nach einem der Patentansprüche 6 bis 8, wobei die tragbare Hilfseinrichtung (1) **dadurch gekennzeichnet ist, dass** bei dem als Doppel-U (6d, 6e) ausgebildeten kürzeren Rahmenteil (4d) sowohl der Mittelschenkel (6b) als auch einer der Aussenschenkel (6a, 6c) an der Übergangsstelle vom Grund des U zum Schenkel von seinem oberen Ende aus für eine bestimmte Länge abgetrennt und das abgetrennte Ende entfernt ist, wobei die bestimmte Länge so bemessen ist, dass die Spitzen (11, 11a) des Zaunpfahls (3) leicht einfädelbar sind.

10. Verwendung nach einem der Patentansprüche 6 bis 9, wobei die tragbare Hilfseinrichtung (1) **dadurch gekennzeichnet ist, dass** am unteren langen Rahmenteil (4b) mit Abstand zueinander zwei Gummistrippen (8) an ihrem einen Ende befestigt sind, wobei an ihrem anderen Ende ein Haken (9) angebracht ist.

11. Verfahren zum Abbauen von Hütenetz (2) mit bereits eingearbeiteten Zaunpflöcken (3) mit einer Hilfseinrichtung nach einem der Ansprüche 1 bis 5, wobei das Verfahren umfasst:
(a) Halten der Hilfseinrichtung (1) mit einer Hand am Tragegriff (5) oder direkt am Rahmenteil (4a);
(b) Herausziehen eines ersten Zaunpflocks (3) aus der Erde und Einführen mit seinem oberen Ende (10) in die U-Form des kürzeren senkrechten Rahmenteils (4c);
(c) Einführen der ersten Spitze (11) des Zaunpflocks (3) durch die Öffnung (7) im anderen kürzeren Rahmenteil (4d) in die erste U-Form (6d) des Doppel-U;
(d) gegebenenfalls Einführen einen zweite Spitze (11a) durch die zweite Öffnung (7a) in die zweite U-Form (6e) des Doppel-U.
(e) Bewegen der Hilfseinrichtung (1) zum nächsten Zaunpflock (3), wobei das Hütenetz (2) eine Schlaufe (12) bildet, die lediglich der halben Zaunlänge zwischen zwei Zaunpflöcken (3) entspricht; sowie
(f) Einlegen des nächsten Zaunpflocks (3) in die Hilfseinrichtung (1) gemäß den Schritten (a) bis (e) bis alle Zaunpflöcke (3) in der Hilfseinrichtung eingelegt sind.

12. Das Verfahren nach Anspruch 11, ferner umfassend folgende Schritte:
(g) Ablegen der Hilfseinrichtung (1) am Boden;
(h) Zusammenrollen der Schlaufen (12), die sich zwischen den Zaunpflöcken (3) gebildet haben, und
(i) Festlegen der zusammengerollten Schlaufen (12) mittels Gummistrippen (8) und Haken (9) durch Einhaken der Haken (9) am oberen Rahmenteil (4a) an der Hilfseinrichtung (1).

13. Verfahren zum Aufbauen von Hütenetz (2) mit bereits eingearbeiteten Zaunpflöcken (3) mit einer Hilfseinrichtung nach einem der Ansprüche 1 bis 5, das erhältlich ist durch das Verfahren von Anspruch 12, wobei das Verfahren umfasst:
(i) Ablegen der Hilfseinrichtung (1) am Boden;
(ii) Lösen der Haken (9) der Gummistrippen (8);
(iii) Auslegen der aufgerollten Schlaufen (12) des Hütenetzes (2);
(iv) Aufnehmen der Hilfseinrichtung (2) am Tragegriff (5) oder direkt am Rahmenteil (4a);
(v) Entnehmen und Setzen des ersten Zaunpflocks (3) aus der Hilfseinrichtung (1);
(vi) Weiterbewegen der Hilfseinrichtung (1);
(vii) Entnehmen des nächsten Zaunpflocks (3) und Setzen dieses Zaunpflocks (3) nach Spannen des Zauns (2);
(viii) Wiederholen der Schritte (vi) und (vii) so lange, bis der Vorrat an Hütenetz (2) verbraucht ist.

14. Das Verfahren nach Anspruch 13, wobei dieses Verfahren so lange mit einer neuen, bestückten Hilfseinrichtung (1) solange fortgesetzt, bis die Einzäunung komplett ist.

15. Tragbare Hilfseinrichtung (1) zum Auf- und Abbauen sowie zum Transportieren und Lagern von Hütenetz (2) mit bereits eingearbeiteten Zaunpflöcken (3), wobei die Hilfseinrichtung (1) aus einem rechteckigen Rahmen (4) besteht, dessen längere Seiten (4a, 4b) bei Gebrauch horizontal angeordnet und so lang sind, dass zwischen die sie verbindenden, senkrecht stehenden kurzen Rahmenteile (4c, 4d) ein Zaunpfahl (3) mit Spiel aufnehmbar ist, **dadurch gekennzeichnet, dass** ein kurzes, im Gebrauch senkrecht stehendes Rahmenteil (4c) als einfaches U mit den Aussenschenkeln (6a, 6c) und das gegenüberliegende kurze Rahmenteil (4d) als Doppel-U (6d, 6e) mit den Aussenschenkeln (6a, 6c) und einem gemeinsamen Mittelschenkel (6b) ausgestaltet ist und zwischen den Aussenschenkeln (6a, 6c) am jeweils oberen und unteren Ende der kurzen Rahmenteile (4c, 4d) die langen Rahmenteile (4a, 4b) aufgenommen und befestigt sind.

## Claims

1. Portable auxiliary device (1) in which, for set-up and take-down as well as for transport and storage, a pasturing fence (2) comprising incorporated fence posts (3) is received, and wherein the auxiliary device (1) consists of a rectangular frame (4) whose longer sides (4a, 4b) are horizontally positioned when in use and have a length such that, between the vertically positioned short frame sections (4c, 4d) which connect them, a fence post (3) can be received with clearance.

2. The portable auxiliary device (1) in which, for set-up and take-down as well as for transport and storage, a pasturing fence (2) comprising incorporated fence posts (3) is received, according to Claim 1, **characterized in that** a short frame section (4c), which is vertically positioned when in use, is shaped as a single U comprising the outer legs (6a, 6c) and the opposite short frame section (4d) is shaped as a double-U (6d, 6d) comprising the outer legs (6a, 6c) and a common middle leg (6b) and between the outer legs (6a, 6c), at the respective upper and lower end of the short frame sections (4c, 4d), the long frame sections (4a, 4b) are received and attached.

3. The portable auxiliary device (1) in which, for set-up and take-down as well as for transport and storage, a pasturing fence (2) comprising incorporated fence posts (3) is received, according to Claim 1 or 2, **characterized in that**, for the shorter frame section (4d) which is shaped as a double-U (6d, 6e), the middle leg (6b) as well as one of the outer legs (6a, 6c), at the transition on the bottom of the U to the leg, are separated from the upper end over a certain length and the separated end is flared towards the outside so that, through the opening (7) thus produced, the first tip (11) can easily be inserted and, through the second opening (7a) thus produced, the second tip (11a) of a fence post (3) can easily be inserted in a transversal direction to the longitudinal direction of the frame (4).

4. The portable auxiliary device (1) in which, for set-up and take-down as well as for transport and storage, a pasturing fence (2) comprising incorporated fence posts (3) is received, according to any one of Claim 1 to 3, **characterized in that**, for the shorter frame section (4d) which is shaped as a double-U (6d, 6e), the middle leg (6b) as well as one of the outer legs (6a, 6c), at the transition on the bottom of the U to the leg, are separated from the upper end over a certain length and the separated end is removed, wherein said certain length is such that the tips (11, 11a) of the fence post (3) can easily be inserted.

5. The portable auxiliary device (1) in which, for set-up and take-down as well as for transport and storage, a pasturing fence (2) comprising incorporated fence posts (3) is received, according to any one of Claims 1 to 4, **characterized in that** onto the lower long frame section (4b) two elastic bands (8) are in a spaced apart manner attached by one of their respective ends, wherein a hook (9) is attached to the other one of their respective ends.

6. Use of a portable auxiliary device (1), wherein the auxiliary device (1) consists of a rectangular frame (4) whose longer sides (4a, 4b) are horizontally positioned when in use and have a length such that, between the vertically positioned short frame sections (4c, 4d) which connect them, a fence post (3) can be received with clearance, for setting up and taking down as well as for transporting and storing a pasturing fence (2) comprising incorporated fence posts (3).

7. The use according to Claim 6, wherein the portable auxiliary device (1) is **characterized in that** a short frame section (4c), which is vertically positioned when in use, is shaped as a single U comprising the outer legs (6a, 6c) and the opposite short frame section (4d) is shaped as a double-U (6d, 6d) comprising the outer legs (6a, 6c) and a common middle leg (6b) and between the outer legs (6a, 6c), at the respective upper and lower end of the short frame sections (4c, 4d), the long frame sections (4a, 4b) are received and attached.

8. The use according to Claim 6 or 7, wherein the portable auxiliary device (1) is **characterized in that**, for the shorter frame section (4d) which is shaped as a double-U (6d, 6e), the middle leg (6b) as well as one of the outer legs (6a, 6c), at the transition on the bottom of the U to the leg, are separated from the upper end over a certain length and the separated end is flared towards the outside so that, through the opening (7) thus produced, the first tip (11) can easily be inserted and, through the second opening (7a) thus produced, the second tip (11a) of a fence post (3) can easily be inserted in a transversal direction to the longitudinal direction of the frame (4).

9. The use according to any one of Claims 6 to 8, wherein the portable auxiliary device (1) is **characterized in that**, for the shorter frame section (4d) which is shaped as a double-U (6d, 6e), the middle leg (6b) as well as one of the outer legs (6a, 6c), at the transition on the bottom of the U to the leg, are separated from the upper end over a certain length and the separated end is removed, wherein said certain length is such that the tips (11, 11a) of the fence post (3) can easily be inserted.

10. The use according to any one of Claims 6 to 9, wherein the portable auxiliary device (1) is **characterized in that** onto the lower long frame section (4b) two elastic bands (8) are in a spaced apart manner attached by one of their respective ends, wherein a hook (9) is attached to the other one of their respective ends.

11. Method for taking down a pasturing fence (2) comprising incorporated fence posts (3) by means of an auxiliary device according to any one of Claims 1 to 5, wherein the method comprises:
(a) holding the auxiliary device (1) with one hand at the handle (5) or directly at the frame section (4a);
(b) drawing the first fence post (3) out of the soil and inserting its upper end (10) into the U-shaped area of the shorter vertical frame section (4c);
(c) inserting the first tip (11) of the fence post (3) through the opening (7) within the other shorter frame section (4d) into the first U-shaped area (6d) of the double-U;
(d) if applicable, inserting a second tip (11a) through the second opening (7a) into the second U-shaped area (6e) of the double-U;
(e) moving the auxiliary device (1) to the next fence post (3), wherein the web of the pasturing fence (2) forms a loop (12) that corresponds to merely half the fence length between two fence posts (3); and
(f) inserting the next fence post (3) into the auxiliary device (1) according to steps (a) to (e), until all fence posts (3) have been inserted into the auxiliary device.

12. The method according to Claim 11, further comprising the following steps:
(g) laying down the auxiliary device (1) onto the soil;
(h) coiling the loops which have developed between the respective fence post (3), and
(i) fixing the coiled loops (12) by means of elastic bands (8) and hooks (9), by hooking up the hooks (9) onto the upper frame section (4a) of the auxiliary device (1).

13. Method for setting up a pasturing fence (2) comprising incorporated fence posts (3) by means of an auxiliary device according to any one of Claims 1 to 5, which can be obtained by the method according to Claim 12, wherein the method comprises:
(i) laying down the auxiliary device (1) onto the soil;
(ii) releasing the hooks (9) of the elastic bands (8);
(iii) laying out the coiled-up loops (12) of the web of the pasturing fence (2);
(iv) picking up the auxiliary device (2) at the handle (5) or directly at the frame section (4a);
(v) taking the first fence post (3) out of the auxiliary device (1) and setting it up;
(vi) moving the auxiliary device (1) forward;
(vii) taking out the next fence post (3) and setting up this fence post (3), after having tightened the fence (2);
(viii) repeating steps (vi) to (vii) until the entire stock of the pasture fence (2) has been used up.

14. The method according to Claim 13, wherein the method is continued using a fresh, loaded auxiliary device (1) until the fencing is complete.

15. Portable auxiliary device (1) for setting up and taking down as well as for transporting and storing a pasturing fence (2) comprising incorporated fence posts (3), wherein the auxiliary device (1) consists of a rectangular frame (4) whose longer sides (4a, 4b) are horizontally positioned when in use and have a length such that, between the vertically positioned short frame sections (4c, 4d) which connect them, a fence post (3) can be received with clearance, **characterized in that** a short frame section (4c), which is vertically positioned when in use, is shaped as a single U comprising the outer legs (6a, 6c) and the opposite short frame section (4d) is shaped as a double-U (6d, 6d) comprising the outer legs (6a, 6c) and a common middle leg (6b) and between the outer legs (6a, 6c), at the respective upper and lower end of the short frame sections (4c, 4d), the long frame sections (4a, 4b) are received and attached.

## Revendications

1. Dispositif auxiliaire (1) portatif, dans lequel est logé, aux fins du montage et du démontage et aux fins du transport et de l'entreposage, un filet pour pâturages (2) avec des piquets d'enclos (3) déjà intégrés et dans lequel le dispositif auxiliaire (1) est constitué d'un châssis (4) rectangulaire, dont les côtés (4a 4b) plus longs sont disposés de manière horizontale lors de l'utilisation et sont si longs qu'un poteau d'enclos (3) peut être logé avec du jeu entre les parties courtes de châssis (4c, 4d) situés à la verticale, reliant lesdits côtés plus longs.

2. Dispositif auxiliaire (1) portatif, dans lequel est logé, aux fins du montage et du démontage et aux fins du transport et de l'entreposage, un filet pour pâturages (2) avec des piquets d'enclos (3) déjà intégrés selon la revendication 1, **caractérisé en ce qu'**une partie courte de châssis (4c) située à la verticale lors de l'utilisation est configurée sous la forme d'un simple U avec des branches extérieures (6a, 6c) et la partie courte de châssis opposée (4d) est configurée sous la forme d'un double U (6d, 6e) avec les branches extérieures (6a, 6c) et une branche centrale (6b) commune et les parties longues de châssis (4a, 4b) sont logées et fixées entre les branches extérieures (6a, 6c) au niveau respectivement de l'extrémité supérieure et de l'extrémité inférieure des parties de châssis (4c, 4d) courtes.

3. Dispositif auxiliaire (1) portatif, dans lequel est logé, aux fins du montage et du démontage et aux fins du transport et de l'entreposage, un filet pour pâturages (2) avec des piquets d'enclos (3) déjà intégrés selon la revendication 1 ou 2, **caractérisé en ce que** dans le cas de la partie de châssis (4d) plus courte réalisée sous la forme d'un double U (6d, 6e), à la fois la branche centrale (6b) et une des branches extérieures (6a, 6c) sont découpées pour une longueur donnée depuis leur extrémité supérieure au niveau de l'emplacement de transition allant de la base du U jusqu'à la branche, et l'extrémité découpée est placée si loin vers l'extérieur que la première pointe (11) peut être facilement enfilée à travers l'ouverture (7) obtenue et la seconde pointe (11a) d'un poteau d'enclos (3) peut être facilement enfilée par la deuxième ouverture (7a) obtenue de manière transversale par rapport à la direction longitudinale du châssis (4).

4. Dispositif auxiliaire (1) portatif, dans lequel est logé, aux fins du montage et du démontage et aux fins du transport et de l'entreposage, un filet pour pâturages (2) avec des piquets d'enclos (3) déjà intégrés selon l'une quelconque des revendications 1 à 3, **caractérisé en ce que** dans le cas de la partie de châssis (4d) plus courte réalisée sous la forme d'un double U (6d, 6e), à la fois la branche centrale (6b) et une des branches extérieures (6a, 6c) sont découpées pour une longueur donnée depuis leur extrémité supérieure au niveau de l'emplacement de transition allant de la base du U vers la branche et l'extrémité découpée est retirée, dans lequel la longueur donnée présente une dimension telle que les pointes (11, 11a) du poteau d'enclos (3) peuvent être facilement enfilées.

5. Dispositif auxiliaire (1) portatif, dans lequel est logé, aux fins du montage et du démontage et aux fins du transport et de l'entreposage, un filet pour pâturages (2) avec des piquets d'enclos (3) déjà intégrés selon l'une quelconque des revendications 1 à 4, **caractérisé en ce que** deux bandes de caoutchouc (8) sont fixées par une de leurs extrémités au niveau de la partie longue inférieure de châssis (4b) à distance l'une de l'autre, dans lequel un crochet (9) est mis en place au niveau de leur autre extrémité.

6. Utilisation d'un dispositif auxiliaire (1) portatif, dans laquelle le dispositif auxiliaire (1) est constitué d'un châssis (4) rectangulaire, dont les côtés (4a, 4b) plus longs sont disposés de manière horizontale lors de l'utilisation et sont si longs qu'un piquet d'enclos (3) peut être logé avec du jeu entre les parties courtes de châssis (4c, 4d) situées à la verticale reliant lesdits côtés plus longs, afin de monter et de démonter ainsi qu'afin de transporter et d'entreposer un filet pour pâturages (2) avec des piquets d'enclos (3) déjà intégrés.

7. Utilisation selon la revendication 6, dans laquelle le dispositif auxiliaire (1) portatif est **caractérisé en ce qu'**une partie courte de châssis (4c) située à la verticale lors de l'utilisation est configurée sous la forme d'un simple U avec des branches extérieures (6a, 6c) et la partie de châssis (4d) courte opposée est configurée sous la forme d'un double U (6d, 6e) avec des branches extérieures (6a, 6c) et une branche centrale (6b) commune, et les parties de châssis (4a, 4b) longues sont logées et fixées entre les branches extérieures (6a, 6c) au niveau respectivement de l'extrémité supérieure et de l'extrémité inférieure des parties de châssis (4c, 4d) courtes.

8. Utilisation selon la revendication 6 ou 7, dans laquelle le dispositif auxiliaire (1) portatif est **caractérisé en ce que** dans le cas de la partie de châssis (4d) plus courte réalisée sous la forme d'un double U (6d, 6e), la fois la branche centrale (6b) et une des branches extérieures (6a, 6c) sont découpées pour une longueur donnée depuis leur extrémité supérieure au niveau de l'emplacement de transition allant de la base du U jusqu'à la branche et l'extrémité découpée est placée si loin vers l'extérieur que la première pointe (11) peut être facilement enfilée à travers l'ouverture (7) obtenue et la seconde pointe (11a) du poteau d'enclos (3) peut être facilement enfilée par la deuxième ouverture (7a) obtenue de manière transversale par rapport à la direction longitudinale du châssis (4).

9. Utilisation selon l'une quelconque des revendications 6 à 8, dans laquelle le dispositif auxiliaire (1) portatif est **caractérisé en ce que** dans le cas de la partie de châssis (4d) plus courte réalisée sous la forme d'un double U (6d, 6e), à la fois la branche centrale (6b) et une des branches extérieures (6a, 6c) sont découpées pour une longueur donnée depuis leur extrémité supérieure au niveau de l'emplacement de transition allant de la base du U vers la branche et l'extrémité découpée est retirée, dans laquelle la longueur donnée présente une dimension telle que les pointes (11, 11a) du poteau d'enclos (3) peuvent être facilement enfilées.

10. Utilisation selon l'une quelconque des revendications 6 à 9, dans laquelle le dispositif auxiliaire (1) portatif est **caractérisé en ce que** deux bandes de caoutchouc (8) sont fixées par une de leurs extrémités au niveau de la partie longue inférieure de châssis (4b) à distance l'une de l'autre, dans laquelle un crochet (9) est mis en place au niveau de leur autre extrémité.

11. Procédé servant à démonter un filet pour pâturages (2) avec des piquets d'enclos (3) déjà intégrés à l'aide d'un dispositif auxiliaire selon l'une quelconque des revendications 1 à 5, dans lequel le procédé comprend les étapes suivantes :
(a) le maintien du dispositif auxiliaire (1) à l'aide d'une main au niveau de la poignée de transport (5) ou directement au niveau de la partie de châssis (4a) ;
(b) le retrait d'un premier piquet d'enclos (3) de la terre et son introduction par son extrémité (10) supérieure dans la forme en U de la partie de châssis (4c) plus courte verticale ;
(c) l'introduction de la première pointe (11) du piquet d'enclos (3) à travers l'ouverture (7) dans l'autre partie de châssis (4d) plus courte dans la première forme en U (6d) du double U ;
(d) éventuellement l'introduction d'une seconde pointe (11a) à travers la deuxième ouverture (7a) dans la deuxième forme en U (6e) du double U ;
(e) le déplacement du dispositif auxiliaire (1) vers le prochain piquet d'enclos (3), dans lequel le filet pour pâturages (2) forme une boucle (12), qui correspond seulement à la moitié de la longueur de l'enclos entre deux piquets d'enclos (3) ; ainsi que
(f) l'insertion du prochain piquet d'enclos (3) dans le dispositif auxiliaire (1) selon les étapes (a) à (e) jusqu'à ce que tous les piquets d'enclos (3) soient insérés dans le dispositif auxiliaire.

12. Procédé selon la revendication 11, comprenant en outre des étapes qui suivant :
(g) le dépôt du dispositif auxiliaire (1) sur le sol ;
(h) l'enroulement des boucles (12) qui se sont formées entre les piquets d'enclos (3) ; et
(i) la fixation des boucles (12) enroulées au moyen de bandes de caoutchouc (8) et de crochets (9) en accrochant les crochets (9) au niveau de la partie de châssis (4a) supérieure au niveau du dispositif auxiliaire (1).

13. Procédé servant à monter un filet pour pâturages (2) avec des piquets d'enclos (3) déjà intégrés à l'aide du dispositif auxiliaire selon l'une quelconque des revendications 1 à 5, qui peut être obtenu par le procédé selon la revendication 12, dans lequel le procédé comprend les étapes suivantes :
(i) le dépôt du dispositif auxiliaire (1) sur le sol ;
(ii) le desserrage des crochets (9) des bandes de caoutchouc (8) ;
(iii) le déroulement des boucles (12) enroulées du filet pour pâturages (2) ;
(iv) le logement du dispositif auxiliaire (2) au niveau de la poignée de transport (5) ou directement au niveau de la partie de châssis (4a) ;
(v) le retrait et la pose du premier pilier d'enclos (3) hors du dispositif auxiliaire (1) ;
(vi) la poursuite du déplacement du dispositif auxiliaire (1) ;
(vii) le retrait du prochain piquet d'enclos (3) et la pose dudit piquet d'enclos (3) après la mise sous tension de l'enclos (2) ;
(viii) la répétition des étapes (vi) et (vii) jusqu'à l'utilisation complète de la réserve en filet pour pâturages (2).

14. Procédé selon la revendication 13, dans lequel ledit procédé continue à être exécuté avec un nouveau dispositif auxiliaire (1) chargé jusqu'à ce que la clôture soit complète.

15. Dispositif auxiliaire (1) portatif servant au montage et au démontage ainsi qu'au transport et à l'entreposage d'un filet pour pâturages (2) avec des piquets d'enclos (3) déjà intégrés, dans lequel le dispositif auxiliaire (1) est constitué d'un châssis (4) rectangulaire, dont les côtés (4a 4b) plus longs sont disposés de manière horizontale lors de l'utilisation et sont si longs qu'un poteau d'enclos (3) peut être logé avec du jeu entre les parties de châssis (4c, 4d) courtes situés à la verticale, reliant lesdits côtés plus longs, **caractérisé en ce qu'**une partie courte de châssis (4c) située à la verticale lors de l'utilisation est configurée sous la forme d'un simple U avec les branches extérieures (6a, 6c) et la partie courte de châssis opposée (4d) est configurée sous la forme d'un double U (6d, 6e) avec les branches extérieures (6a, 6c) et une branche centrale (6b) commune et les parties longues de châssis (4a, 4b) sont logées et fixées entre les branches extérieures (6a, 6c) au niveau respectivement de l'extrémité supérieure et de l'extrémité inférieure des parties courtes de châssis (4c, 4d).
